# EUROPÄISCHE PATENTSCHRIFT

(11) **EP 1 334 142 B1**
(45) Veröffentlichungstag und Bekanntmachung des Hinweises auf die Patenterteilung: **05.10.2005**
(21) Anmeldenummer: 01980524.1
(22) Anmeldetag: 26.10.2001
(51) Int. Cl.: C08F 20/12, C09J 133/06, C08F 2/48

(54) **VERFAHREN ZUR HERSTELLUNG VON ACRYLATHAFTKLEBEMASSEN**
METHOD FOR PRODUCING ACRYLATE ADHESIVE MATERIALS
PROCEDE DE PREPARATION DE MATIERES AUTO-ADHESIVES ACRYLATE

(30) Priorität: 27.10.2000 DE 10053563
(43) Veröffentlichungstag der Anmeldung: 13.08.2003
(73) Patentinhaber: tesa AG, 20253 Hamburg (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2001/012431
(87) Internationale Veröffentlichungsnummer: WO 2002/034805

(56) Entgegenhaltungen:
- GB-A- 951 428
- US-A- 4 968 558
- DATABASE WPI Week 9238 Derwent Publications Ltd., London, GB; AN 313331 XP002189320 "PRODUCTION OF SOLVENT TYPE ACRYLIC TACKY ADHESIVE BY PHOTOPOLYMERISING MONOMER SOLUTION OF VINYL MONOMER OF (METH)ACRYLIC ACID ALKYL ESTER, INITIATOR AND SOLVENT, COMPLETING POLYMERISATION THERMALLY." & JP 04 220485 A (SEKISUI CHEM. IND. CO. LTD.), 11. August 1999 (1999-08-11)

## Beschreibung

Die Erfindung betrifft ein Verfahren zur Herstellung von Acrylathotmelts durch radikalische Polymerisation sowie die Verwendung eines solchen Acrylathotmelts.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden.
Acrylathaftklebemassen können sehr individuell hergestellt werden. Sie sind sehr variabel anwendbar, da eine Vielzahl unterschiedlicher Comonomere zur Polymerisation zur Verfügung steht und sich die klebtechnischen Eigenschaften des Polyacrylates durch die Wahl der (Co-)Monomerzusammensetzung variieren lassen. Als Comonomere werden als Hauptkomponenten üblicherweise Alkylester der Acryl- und Methacrylsäure eingesetzt, in geringeren Anteilen zumeist (zusätzlich) Acrylsäure, Methacrylsäure, Acrylamide, Maleinsäureanhydrid, Hydroxyacrylate oder Itakonsäure. Zur Herstellung dieser Polyacrylate wird die radikalische Polymerisation in Lösung oder in Emulsion angewandt. Beide Techniken weisen unter anderem die im folgenden geschilderten Probleme auf, sind aber sehr kostengünstig und werden daher seit langem in der Produktion durchgeführt.
Für die Verarbeitung als Haftschmelzkleber muß das Lösemittel entfernt werden. Für Emulsionspolymerisate ist dies ein sehr energieaufwendiger Prozeß, da Wasser einen geringen Dampfdruck aufweist und sich somit nur sehr schwer verdampfen läßt. Zudem stören im Polymer verbleibende Emulgatoren, welche die Wasserempfindlichkeit der resultierenden Haftklebemasse heraufsetzen.
Bei Lösemittelpolymerisaten möchte man den Lösemittelanteil herabsetzen. Hier sind aber die konvenbonellen Methoden limitiert, da die Polymerisation zumeist thermisch initiiert wird. Während der Polymerisation muß die entstehende Reaktionswärme über die Siedekühlung abgeführt werden. Da zumeist zur Polymerisation Azo-Initiatoren mit Zerfalls-Halbwertszeiten von ca. 1 Stunde bei T > 60 °C eingesetzt werden, verbleiben weiterhin Initiatoranteile im Polymer, die dann auch noch nach dem Aufkonzentrationsprozeß vorhanden sind. Diese Restinitiatoren können verschiedene Probleme verursachen. Zum einen kann während der Schmelzbeschichtung bei sehr hohen Temperaturen ein großer Anteil der Restinitiatoren zerfallen. Durch das freiwerdende Stickstoffgas entstehen Blasen innerhalb der Haftklebemasse, die für die Produktqualität unerwünscht sind. Zum anderen werden - um eine Elektronenstrahlvernetzbarkeit der Acrylathaftklebemasse zu gewährleisten - multifunktionelle Acrylate hinzugegeben. Diese sind besonders essentiell für Harz-abgemischte Acrylathaftklebemassen. Während der Beschichtung erzeugen die Restinitiatoren nicht nur Blasen, sondern die gebildeten Radikale reagieren auch mit den multifunktionellen Acrylaten und bewirken somit eine zusätzliche unkontrollierte Vernetzung der Acrylathaftklebemasse. Diese sogenannte Vergelung beeinflußt die Beschichtung negativ. Die teilweise vergelte Klebemasse läßt sich nicht mehr beschichten, außerdem können sich festere, höher vergelte Stellen in der Klebemasse ausbilden, welche die klebtechnischen Eigenschaften des Haftklebebandes negativ beeinflussen.

Eine Lösung ist die UV-Polymerisation von Acrylaten. In der US 3,840,448 wurden Acrylate polymerisiert und vernetzt durch die Einstrahlung von UV-Licht. Die hergestellten Polymere wurden aber nicht für Haftklebemassen verwendet.

In der US 4,181,752 werden UV-Präpolymerisate hergestellt, die nach Beschichtung auf dem Träger zu vollständigem Umsatz polymerisiert und vernetzt werden. In den US 4,968,558 und US 5,183,833 wurden ebenfalls Acrylate und Vinylverbindungen zu Haftklebemassen über die Präpolymerisationstechnik hergestellt. Hier wurden zur Präpolymerisation UV-B Lampen in Verbindung mit Irgacure 651™ (Benzildimethylketal, Fa. Ciba Geigy) eingesetzt Die Präpolymerisationtechnik ist bereits sehr verbreitet, dennoch ist auch diese Technik mit Problemen behaftet. Ein stark monomerhaltiger Sirup muß auf das Trägermaterial aufgebracht werden; erst auf dem Trägermaterial wird bis zu hohem Umsatz polymerisiert. Durch diesen Prozeß können nur sehr langsame Bahngeschwindigkeiten erreicht werden, zudem ist der Restmonomeranteil in der Klebemasse relativ hoch. Weiterhin bereitet die Einarbeitung von Harzen Probleme, da zumeist unter Verwendung von UV-Licht vernetzt wird und viele technisch bedeutende Harze UV-Licht absorbieren und somit als Regler fungieren.

Aufgabe der Erfindung ist es daher, ein Verfahren zur Herstellung von Acrylathaftklebemassen anzubieten, welches die im vorstehenden genannten Nachteile des Standes der Technik nicht aufweist. Insbesondere soll bereits bei der Polymerisation in Lösung ein hoher Umsatz erzielt werden können, ohne daß es in der entstehenden Acrylatmasse im weiteren zu Vergelungsprozessen kommt. Die klebtechnischen Eigenschaften der Acrylatmasse sollen ein für die technische Anwendung erforderliches Niveau nicht unterschreiten.

Die Aufgabe wird überraschend und für den Fachmann nicht vorhersehbar gelöst durch ein Verfahren, wie es im Hauptanspruch dargestellt wird. Die Unteransprüche betreffen vorteilhafte Weiterentwicklungen der Erfindung sowie eine Verwendung der derart hergestellten Haftklebemasse.

Demgemäß ist ein Verfahren zur Herstellung von Haftklebemassen auf Acrylathotmeltbasis Gegenstand der Erfindung, bei welchem eine Monomermischung enthaltend zumindest die folgenden Monomere
(a) 70 bis 100 Gew.-% Verbindungen aus der Gruppe der (Meth-)Acrylsäureester entsprechend der folgenden allgemeinen Formel 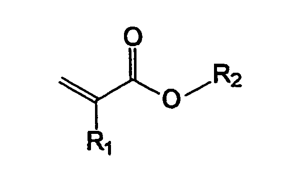 mit R₁ = H oder CH₃ und R₂ = eine Alkylkette mit 2 bis 20 Kohlenstoffatomen
   sowie enthaltend
(b) 0 bis 30 Gew.-% olefinisch ungesättigte Monomere mit funktionellen Gruppen
   sowie enthaltend
(c) gegebenenfalls weitere Komponenten,
in Lösung radikalisch polymerisiert wird, so daß ein Polyacrylat entsteht, und bei welchem
I. die Polymerisation durch Verwendung zumindest eines spaltenden Photoinitiators und durch Bestrahlung mit ultraviolettem Licht initiiert wird, wobei der Photoinitiator vor Beginn der Polymerisation zu der Monomerenmischung und/oder im Verlauf der Polymerisation zu dem Reaktionsgemisch gegeben wird,
II. das Polyacrylat vom Lösungsmittel befreit wird,
III. das Polyacrylat in der Schmelze weiterverarbeitet wird.

Die Zusammensetzung der entsprechenden Comonomere wird in bevorzugter Weise so gewählt, daß die resultierenden Haftklebemassen entsprechend D. Satas [Handbook of Pressure Sensitive Adhesive Technology, 1989, Verlag VAN NOSTRAND REINHOLD, New York] haftklebende Eigenschaften besitzen. Die statische Glasübergangstemperatur der Haftklebemasse liegt somit unterhalb 25 °C.

Für das erfinderische Verfahren zur Herstellung der Haftklebemassen werden als Comonomere (Komponente (b)) olefinisch ungesättigte Verbindungen, welche bevorzugt funktionelle Gruppen enthalten, mit einem Anteil von 0 - 30 Gewichtsprozent eingesetzt. Beispiele für solche olefinisch ungesättigten Verbindungen sind (Meth)acrylsäure und deren Methylester, Methacrylsäurederivate wie (Meth)acrylamide, N-substituierte (Meth)acrylamide, Dimethylacrylsäure, Trichloracrylsäure, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat, Acrylonitril, weiterhin Vinylverbindungen wie Vinylester, Vinylether, Vinylhalogenide, Vinylidenhalogenide und Nitrile von ethylenisch ungesättigten Kohlenwasserstoffen, Vinylverbindungen mit aromatischen Cyclen und Heterocyclen in α-Stellung, insbesondere Vinylessigsäure und Vinylacetat, N-Vinylformamid, Vinylpyridin, Ethylvinylether, Vinylchlorid, Vinylidenchlorid, außerdem Maleinsäureanhydrid, Styrol, Styrol-Verbindungen, β-Acryloyloxypropionsäure, Fumarsäure, Crotonsäure, Aconitsäure und/oder ltaconsäure; die vorstehende Aufzählung ist nur beispielhaft und nicht abschließend.

Als Photoinitiatoren können alle Norrish-Typ-I-Photoinitiatoren (im folgenden auch kurz als Typ-I-Photoinitiatoren bezeichnet) eingesetzt werden. Der Anteil der Photoinitiatoren liegt, bezogen auf die eingesetzten Monomeren, vorteilhaft zwischen 0,1 und 2, bevorzugt zwischen 0,25 und 1 Gewichtsprozent Bevorzugt können z.B. Irgacure 651™ oder Irgacure 819™ (Fa. Ciba Geigy) verwendet werden. Auch Photoinitiatorengemische sind im erfinderischen Sinne sehr zur Initiierung geeignet. Sehr bevorzugt werden Photoinitiatoren mit langwelliger Absorption eingesetzt, da diese eine große Eindringtiefe besitzen und somit leichter die Monomer/Polymer-Mischung durchdringen.
Zur linearen Polymerisation wird bevorzugt mit einem Norrish-Typ-I-Photoinitiator gestartet. Norrish-Typ-II-Photoinitiatoren (Typ-II-Photoinitiatoren) verursachen mehr Pfropfreaktionen (zur Herstellung von verzweigten Polyacrylaten) und werden daher bevorzugt im Verlauf der UV-Polymerisation hinzudosiert. Dennoch können auch UV-Polymerisationen mit Typ-II-Photoinitiatoren gestartet werden.

Als Norrish-Typ-I-Photoinitiatoren werden solche Verbindungen bezeichnet, welche bei Bestrahlung mit Licht gemäß einer Norrish-Typ-I-Reaktion zerfallen. Dabei handelt es sich klassisch um eine Photofragmentierung einer Carbonyl-Verbindung, bei dem die Bindung zu einem in α-Stellung zur Carbonylgruppe befindlichen Kohlenstoffatom radikalisch aufgespalten wird (α-Spaltung), so daß ein Acyl- und ein Alkyl-Radikal entstehen.
Im erfinderischen Sinne werden zu den Norrish-Photoinitiatoren auch solche gezählt, bei denen statt der Carbonyl-Gruppe eine andere funktionelle Gruppe vorhanden ist und die Spaltung die Bindung zwischen dieser Gruppe und einem α-ständigen Kohlenstoffatom betrifft.
Norrish-Typ-II-Photoinitiatoren zerfallen bei Bestrahlung mit Licht gemäß einer Norrish-Typ-II-Reaktion unter Wasserstoff-Abstraktion, es handelt sich dabei um eine intramolekulare Reaktion.
Bei aliphatischen Ketonen kann dabei ein Wasserstoff aus der γ-Position zu einer entsprechend der oben dargestellten funktionellen Gruppe abgespalten werden.
Erfindungsgemäße Beispiele für Norrish-Photoinitiatoren beiden Typs sind Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, ohne sich durch diese Aufzählung unnötig zu beschränken. Zu den Typ-I-Initiatoren gehören insbesondere aromatische Carbonylverbindungen, wie Benzoinderivate, Benzilketale und Acetophenonderivate. Typ-II-Photoinitiatoren sind besonders aromatische Ketone, wie z.B. Benzophenon, Benzil oder Thioxanthone.

Für weitere Details siehe beispielsweise Römpp Lexikon Chemie - Version 2.0, Stuttgart/New York: Georg Thieme Verlag 1999.

Die Polymerisation zur Herstellung der Acrylathaftklebemasse kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind. Zudem sollte eine Einrichtung zur UV-Bestrahlung in dem Reaktor integriert sein.

Vorteilhaft wird das UV-Licht von oben in den Reaktor eingestrahlt. Zur Durchmischung wird bevorzugt ein Propellerrührer eingesetzt, der eine vertikale Durchmischung gewährleistet. Durch eine gute Verteilung der gebildeten Radikale in der Reaktionsmischung wird die Polymerisation gefördert, während bei schlechter Durchmischung aufgrund der begrenzten Eindringtiefe des UV-Lichtes in die Reaktionsmischung nur mit unbefriedigenden Polymerisationsergebnissen gerechnet werden kann.

Die Polymerisation verläuft günstigerweise nach einem freien radikalischen Mechanismus. Das Monomergemisch wird bevorzugt unter Inertgasatmosphäre, wie z.B. Stickstoff, Helium oder Argon mit UV-Licht bestrahlt.

Die radikalische Polymerisation kann in Gegenwart eines oder mehrerer organischer Lösungsmittel und/oder in Gegenwart von Wasser durchgeführt werden, bevorzugt ist die Polymerisation in Gegenwart zumindest eines organischen Lösungsmittels; dabei wird vorteilhaft so wenig Lösungsmittel wie möglich eingesetzt. Die Polymerisationszeit beträgt - je nach Umsatz und Temperatur - zwischen 1 und 24 h.
Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Bei der Polymerisation können auch Thiole, Nitroxide, TEMPO-Derivate (TEMPO = 2,2,6,6-Tetramethyt-1-piperidinyloxy pyrrolidinyloxyl)) oder Thioester der unterschiedlichsten Art als weitere Regler zur Molekulargewichtssenkung und Verringerung der Polydispersität eingesetzt werden. Als sogenannte Polymerisationsregler wirken z.B. auch Alkohole und Ether.

In einer sehr günstigen Ausführung des erfinderischen Verfahrens wird die Bestrahlung mit ultraviolettem Licht nicht kontinuierlich, sondern in Form eines oder mehrerer Bestrahlungszyklen durchgeführt.
Durch die Bestrahlungszyklen der UV-Quelle kann die Polymerisation hinsichtlich der entstehenden Produkte gesteuert werden. Zur Steuerung der Polymerisation kann es angebracht sein, nicht kontinuierlich zu bestrahlen. Dabei kann die Abfolge von Bestrahlungs- und Dunkelzeiten vorteilhaft gewählt werden. Durch entsprechende Bestrahlungszyklen läßt sich der Umsatz und damit auch die entstehende Wärmemenge steuem. Auch die Molekulargewichtsverteilung läßt sich durch den Bestrahlungszyklus beeinflussen. Besonders vorteilhaft ist die Bestrahlung der zu polymerisierenden Monomere mit einem bestimmten Puls. Durch diese Methode werden nur sehr wenige Radikale gebildet, die abreagieren können. Durch den UV-Puls lässt sich somit die Anzahl der erzeugten Radikale steuern und damit auch das Monomer-Radikalverhältnis einstellen. Bei konstantem Verhältnis von Monomer- zu Radikalkonzentration lassen sich mit dieser Technik engverteilte Polyacrylathaftklebemassen herstellen.
Auf der anderen Seite läßt sich sehr schnell auch eine hohe Konzentration an Radikalen generieren, die einen hohen Umsatz erzeugen. UV-initiierte Polymerisationen verlaufen somit bedeutend schneller und wirtschaftlicher als konventionelle Polymerisationen mit Azobisisobutyronitril (AIBN) als Initiator.
Ein weiterer Vorteil ist die einfache Verfahrenstechnik. Thermisch initiierte radikalische Polymerisationen mit z.B. AIBN erzeugen im Verlaufe der Polymerisation Wärme, wodurch der Zerfall von AIBN beschleunigt und die Anzahl der entstehenden Radikale erhöht wird. Im kritischen Fall kann die Polymerisation durchgehen, das heißt unkontrollierbar werden. Die UV-Polymerisation besitzt hingegen den Vorteil, daß durch die Nichtbestrahlung der Monomerlösung keine neuen Radikale gebildet werden und somit die Polymerisation leichter kontrolliert werden kann.

Je nach eingesetztem Photoinitiator und Lösemittel wählt man die einstrahlende Wellenlänge zwischen 200 und 400 nm. Beispielsweise lassen sich handelsübliche Quecksilber-Hochdruck oder Mitteldrucklampen mit einer Leistung von z.B. 80 bis 200 W/cm verwenden.
Vorteilhaft wird die radikalische Polymerisation zumindest bis zu einem Umsatz von 98 % der Monomere durchgeführt.

Das Polymer wird anschließend in einem Aufkonzentrationsextruder vom Lösemittel befreit. Bevorzugt wird hier ein Doppelschneckenextruder eingesetzt, der entweder gegen- oder gleichläufig betrieben wird. Der im Polymer verbleibende flüchtige Anteil sollte kleiner 0,5 Gewichtsanteile betragen. Das Polymer wird bevorzugt unter geringer Scherung aufkonzentriert. Durch das erfindungsgemäße Verfahren kann der Aufkonzentrationsextruder auch bei hohen Temperaturen betrieben werden, ohne daß sich Radikale durch zerfallende thermische Initiatoren bilden.

Zur Verbesserung der klebtechnischen Eigenschaften werden dem Acrylathotmelt bevorzugt Harze beigemischt. Als Harze sind beispielsweise Terpen-, Terpenphenolharze, C₅- und C₉-Kohlenwasserstoffharze, Pinen-, Inden- und Kolophoniumharze auch in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Außerdem können verschiedene Füllstoffe (beispielsweise Ruß, TiO₂, Voll- oder Hohlkugeln aus Glas oder anderen Materialien), Keimbildner, Compoundierungsmittel, Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

Für einige Anwendungen als Haftklebemasse kann es erforderlich sein, das Polymerisat zu vernetzen, insbesondere um die Kohäsion zu steigern. Daher ist es für das erfinderische Verfahren sehr günstig, der Monomermischung, dem Reaktionsgemisch oder dem Polyacrylat Vemetzer zuzusetzen.
Als Vemetzer lassen sich alle dem Fachmann bekannten bi- oder multifunktionellen Verbindungen einsetzen, deren funktionelle Gruppen mit den Polyacrylaten eine Verknüpfungsreaktion eingehen können, insbesondere Polymerisations-, Polykondensations- oder Polyadditionsreaktionen. Insbesondere werden bi- oder multifunktionelle Acrylate und/oder Methacrylate, bi- oder multifunktionelle Isocyanate oder bi- oder multifunktionelle Epoxide eingesetzt. Zur UV- oder ES-Härtung werden multifunktionelle Acrylate bevorzugt. Die Vernetzer werden bevorzugt dem Acrylathotmelt in der Schmelze zudosiert.

Ebenso können unter UV-Strahlung vernetzende Substanzen, wie z.B. UV-Photoinitiatoren, hinzudosiert oder der Acrylatschmelze beigemischt werden. Als Photoinitiatoren können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate eingesetzt werden, wobei diese Aufzählung nicht abschließend ist. Bevorzugt werden Typ-II-Photoinitiatoren eingesetzt. Weiterhin können auch alle dem Fachmann bekannten Promotoren dem Acrylathotmelt beigemischt werden, die die UV-Vemetzung effizienter gestalten könnten.

Die nach dem erfindungsgemäßen Verfahren hergestellte Haftklebemasse ist besonders günstig für die Herstellung von beispielsweise Klebebändern geeignet. Hierfür wird der Acrylathotmelt als Reinsubstanz oder in einer wie bereits beschrieben modifizierten Form aus der Schmelze auf einen Träger aufgetragen.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung ist nicht abschließend.

Die Vernetzung kann dann im erfinderischen Sinne nach dem Auftragen bevorzugt direkt auf dem Trägermaterial durchgeführt werden, bevorzugt durch UV-Strahlung oder durch ionisierende Strahlung, wie z.B. Elektronenstrahlung. Weiterhin kann unter besonderen Umständen auch thermisch vernetzt werden.

Für die UV-Vemetzung erfolgt die Bestrahlung in einem Wellenlängenbereich von 200 bis 400 nm mit handelsüblichen Quecksilber-Hochdruck oder Mitteldrucklampen mit einer Leistung von z.B. 80 bis 200 W/cm. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler. Weiterhin wird bevorzugt bestrahlt unter Inertgasatmosphäre.

Weiterhin ist Inhalt der Erfindung die Verwendung der so erhaltenen Haftklebemasse für ein Klebeband, wobei das Klebeband ein- oder beidseitig mit einer selbstklebenden Schicht ausgerüstet sein kann.

### Beispiele

Die Erfindung soll im folgenden durch einige Beispiele näher erläutert werden, ohne sich hierdurch unnötig beschränken zu wollen.
In Abhängigkeit von den gewünschten klebtechnischen Eigenschaften der Acrylathotmelts wird eine Auswahl an Acryl- und Vinylmonomeren getroffen.

### Testmethoden

Folgende Testmethoden wurden angewendet, um die klebtechnischen Eigenschaften der hergestellten Haftklebemassen zu evaluieren.

### Scherfestigkeit (Test A)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem Gewicht von 2 kg das Klebeband viermal auf den Stahlträger gedrückt. Bei Raumtemperatur wurde ein Gewicht von 1 kg an dem Klebeband befestigt und die Zeit bis zum Herunterfallen des Gewichtes gemessen.
Die gemessenen Scherstandzeiten sind in Minuten angegeben und entsprechen dem Mittelwert aus drei Messungen.

### 180° Klebkrafttest (Test B)

Ein 20 mm breiter Streifen einer auf einer Polyester aufgetragenen Acrylathaftklebemasse wurde auf Stahlplatten, welche zuvor zweimal mit Aceton und einmal mit Isopropanol gewaschen wurden, aufgebracht. Für die Messungen auf dem PE-Substrat wurden nur neue Platten verwendet.
Der Haftklebestreifen wurde zweimal mit einem 2 kg Gewicht auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur unter klimatisierten Bedingungen durchgeführt.
Die Meßergebnisse sind in N/cm angegeben und sind gemittelt aus drei Messungen.

### Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Untersuchte Proben

Eingesetzte kommerziell erhältliche Substanzen

| **Substanz** | **Hersteller** | **Chemische Zusammensetzung** |
|---|---|---|
| Irgacure 819 | Ciba Specialty Chemicals | Bis(2,4,6-trimethylbenzoyl)-phenylphosphinoxid |
| Irgacure 651 | Ciba Specialty Chemicals | Benzyldimethylketal |
| Vazo 67 | DuPont | 2,2'-Azo-bis(2-ethylpropionsäurenitril) |
| Perkadox 16 | Akzo Nobel | Bis-(4-tert.-butylcyclohexyl)-peroxydicarbonat |
| Genomer 4212 | Rahn | Aliphatisches Polyurethanacrylat mit der Funktionalität 2 |
| PETIA | UCB | Pentaerythritoltriacrylat |
| SR 610 | Sartomer | Polyethylenglycoldiacrylat mit dem Polymerisationsgrad 14 |
| Norsolene M1080 | Fa. Cray Valley | Teilhydriertes KW-Harz |
| DT 110 | Fa. DRT | Terpen-Phenol-Harz |

### Beispiel 1

Eine Mischung aus 40 g Acrylsäure, 360 g 2-Ethylhexylacrylat und 400 g Aceton wurde mit 2 g Irgacure 819™ (Fa. Ciba Geigy) abgemischt und für 45 Minuten in einem konventionellen 2 L-Reaktor mit einem Propellerrührer mit Stickstoffgas inertisiert. Zur Initiierung der Polymerisation wurde eine UV-Strahlenquelle Bluepoint™ (340 nm Wellenlänge, Fa. Spectrum) eingesetzt.
Es wurde von oben in die Monomerlösung eingestrahlt. Die Bestrahlungsabfolge wurde dabei gemäß dem folgenden Programm gewählt.

| **Zeitpunkt** | **Zeitdauer** | **Bestrahlungsabfolge** |
|---|---|---|
| Start bis 20 min | 19.5 min | Jeweils 30 s Bestrahlung, 60 s keine Bestrahlung |
| bis 1 h | 40 min | Jeweils 30 s Bestrahlung, 30 s keine Bestrahlung |
| bis 2 h | 60 min | Jeweils 60 s Bestrahlung, 30 s keine Bestrahlung |

Das Polymer wurde im Trockenschrank unter vermindertem Druck und einer Temperatur von 50 °C vom Lösemittel befreit. Anschließend wurde das Polymer über eine auf 170 °C erhitzte Breitschlitzdüse mit einem Masseauftrag von 50 g/m² auf eine mit Saran geprimerte 23 µm dicke PET-Folie beschichtet. Das Klebeband wurde anschließend mit Elektronenstrahlen (Dosis 15 kGy) bei einer Beschleunigungsspannung von 230 kV mit einer Elektronenstrahl-Anlage der Fa. Crosslinking vernetzt.
Zur Analyse der klebtechnischen Eigenschaften wurden die Testmethoden A und B durchgeführt.

### Referenzbeispiel 2

Ein für radikalische Polymerisationen konventioneller 2 L-Glasreaktor wurde mit 40 g Acrylsäure, 360 g 2-Ethylhexylacrylat und 300 g Aceton/Isopropanol (97:3) befüllt. Nach 45minütigem Durchleiten von Stickstoffgas unter Rühren mit einem Ankerrührer wurde der Reaktor auf 58 °C hochgeheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 1 h und nach 1,5 h Reaktionszeit wurden erneut jeweils 0,2 g Vazo 67™ hinzugegeben. Nach 3 und 6 h wurde mit jeweils 150 g Aceton/Isopropanol-Gemisch (97:3) verdünnt. Zur Reduktion der Restinitiatoren wurde nach 16 h 0,4 g Perkadox 16™ (Fa. Akzo Nobel) als Lösung in 10 g Aceton hinzugetropft. Die Reaktion wurde nach 22 h Reaktionszeit abgebrochen und auf Raumtemperatur abgekühlt.
Das Polymer wurde im Trockenschrank unter vermindertem Druck und einer Temperatur von 50 °C vom Lösemittel befreit. Anschließend wurde das Polymer über eine auf 170 °C erhitzte Breitschlitzdüse mit einem Masseauftrag von 50 g/m² auf eine mit Saran geprimerte 23 µm dicke PET-Folie beschichtet. Die Haftklebemasse zeigte ein blasiges Erscheinungsbild. Das Klebeband wurde anschließend mit Elektronenstrahlen (Dosis 15 kGy) bei einer Beschleunigungsspannung von 230 kV mit einer Elektronenstrahl-Anlage der Fa. Crosslinking vernetzt.
Zur Analyse der klebtechnischen Eigenschaften wurden die Testmethoden A und B durchgeführt.

### Beispiel 3

Eine Mischung aus 4 g Acrylsäure, 32 g N-tert.-Butylacrylamid, 4 g Maleinsäureanhydrid, 180 g 2-Ethylhexylacrylat, 180 g n-Butylacrylat und 400 g Aceton wurde mit 2 g Irgacure 819™ (Fa. Ciba Geigy) abgemischt und für 45 Minuten in einem konventionellen 2 L-Reaktor mit einem Propellerrührer mit Stickstoffgas inertisiert. Zur Initiierung der Polymerisation wurde eine UV-Strahlenquelle Bluepoint™ (340 nm Wellenlänge, Fa. Spectrum) eingesetzt.
Es wurde von oben in die Monomerlösung eingestrahlt, dabei wurde analog dem Bestrahlungsprogramm in Beispiel 1 vorgegangen.
Das Polymer wurde in Aceton mit 30 Gewichtsanteilen DT 110™ (Fa. DRT) und 1 Gewichtsanteil SR 610 (Fa. Sartomer) abgemischt und im Trockenschrank unter vermindertem Druck und bei einer Temperatur von 50 °C vom Lösemittel befreit. Anschließend wurde das Polymer über eine auf 170 °C erhitzte Breitschlitzdüse mit einem Masseauftrag von 100 g/m² auf eine mit Saran geprimerte 23 µm dicke PET-Folie beschichtet. Das Klebeband wurde anschließend mit Elektronenstrahlen (Dosis 50 kGy) bei einer Beschleunigungsspannung von 230 kV mit einer Elektronenstrahl-Anlage der Fa. Crosslinking vernetzt.
Zur Analyse der klebtechnischen Eigenschaften wurden die Testmethoden A und B durchgeführt.
Parallel hierzu wurde ein Muster über 8 Stunden bei 140 °C im Trockenschrank gelagert und anschließend Testmethode C durchgeführt.

### Referenzbeispiel 4

Ein für radikalische Polymerisationen konventioneller 2 L-Glasreaktor wurde mit 40 g Acrylsäure, 360 g 2-Ethylhexylacrylat und 300 g Aceton/Isopropanol (97:3) befüllt Nach 45minütigem Durchleiten von Stickstoffgas unter Rühren mit einem Ankerrührer wurde der Reaktor auf 58 °C hochgeheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 1 h und nach 1,5 h Reaktionszeit wurden erneut jeweils 0,2 g Vazo 67™ hinzugegeben. Nach 3 und 6 h wurde mit jeweils 150 g Aceton/Isopropanol-Gemisch (97:3) verdünnt. Zur Reduktion der Restinitiatoren wurde nach 16 h 0,4 g Perkadox 16™ (Fa. Akzo Nobel) als Lösung in 10 g Aceton hinzugetropft. Die Reaktion wurde nach 22 h Reaktionszeit abgebrochen und auf Raumtemperatur abgekühlt.
Das Polymer wurde in Aceton mit 30 Gewichtsanteilen DT 110™ (Fa. DRT) und 1 Gewichtsanteil SR 610 (Fa. Sartomer) abgemischt und im Trockenschrank unter vermindertem Druck und einer Temperatur von 50 °C vom Lösemittel befreit. Anschließend wurde das Polymer über eine auf 170 °C erhitzte Breitschlitzdüse mit einem Masseauftrag von 100 g/m² auf eine mit Saran geprimerte 23 µm dicke PET-Folie beschichtet. Das Klebeband wurde anschließend mit Elektronenstrahlen (Dosis 50 kGy) bei einer Beschleunigungsspannung von 230 kV mit einer Elektronenstrahl-Anlage der Fa. Crosslinking vernetzt.
Zur Analyse der klebtechnischen Eigenschaften wurden die Testmethoden A und B durchgeführt.
Parallel hierzu wurde ein Muster über 8 Stunden bei 140 °C im Trockenschrank gelagert und anschließend Testmethode C durchgeführt.

### Beispiel 5

Es wurde analog Beispiel 3 vorgegangen. Das durch UV-Polymerisation hergestellte Polymer wurde mit 30 Gewichtsanteilen Norsolene M1080™ (Fa. Cray Valley) und 1 Gewichtsanteil Genomer 4212™ (Fa. Rahn) abgemischt.

### Referenzbeispiel 6

Es wurde analog Beispiel 4 vorgegangen. Das durch UV-Polymerisation hergestellte Polymer wurde mit 30 Gewichtsanteilen Norsolene M1080™ (Fa. Cray Valley) und 1 Gewichtsanteil Genomer 4212™ (Fa. Rahn) abgemischt.

### Beispiel 7

Es wurde analog Beispiel 3 vorgegangen. Zur UV-Polymerisation wurden 2 % Acrylsäure, 49 % 2-Ethylhexylacrylat und 49 % n-Butylacrylat eingesetzt. Das Polymer wurde mit 30 Gewichtsanteilen Norsolene M1080™ (Fa. Cray Valley) und 1 Gewichtsanteil PETIA™ (Fa. UCB) abgemischt.

### Referenzbeispiel 8

Es wurde analog Beispiel 4 vorgegangen. Zur UV-Polymerisation wurden 2 % Acrylsäure, 49 % 2-Ethylhexylacrylat und 49 % n-Butylacrylat eingesetzt. Das Polymer wurde mit 30 Gewichtsanteilen Norsolene M1080™ (Fa. Cray Valley) und 1 Gewichtsanteil PETIA™ (Fa. UCB) abgemischt.

### Resultate

Der Vergleich der Beispiele 1 und 2 verdeutlicht, daß durch im Polymer verbleibende Restinitiatoren, wie z.B. Vazo 67™ der Fa. Du Pont, Bestandteile in der Haftklebemasse enthalten sind, die während der Beschichtung bei hohen Temperaturen zerfallen und somit Stickstoffblaseneinschlüsse verursachen. Durch die UV-initiierte Polymerisation kann dies ausgeschlossen werden (siehe Beispiel 1).
Durch die UV-initiierte Polymerisation wird zudem ein unterschiedliches Molekulargewicht sowie eine andere Molekulargewichtsverteilung erreicht Dies spiegelt sich in den unterschiedlichen Klebeigenschaften nieder. Zudem werden in Beispiel 2 durch das blasige Erscheinungsbild auch die klebtechnischen Eigenschaften negativ beeinflußt (siehe Tabelle 1).

**Tabelle 1**

| Beispiel | KK-Stahl [N/cm] | SSZ ,10 N [min] | ES-Dosis [kGy] |
|---|---|---|---|
| 1 | 3,8 | > 10000 | 15 |
| 2 | 3,9 | 6795 | 15 |
| 50 g/m² Masseauftrag | | | |
| SSZ : Scherstandzeit bei RT | | | |
| KK: Klebkraft | | | |

Beispiel 1 zeigt eine deutlich höhere Scherfestigkeit bei gleicher Vernetzungsdosis.
In den Beispielen 3 bis 8 wurde das Vergelungsverhalten durch die Restinitiatoren untersucht Es wurden ausschließlich mit Harz abgemischte Polymere untersucht. Zudem wurden unterschiedliche multifunktionelle Acrylate hinzugegeben, um die Elektronenstrahl-Vemetzbarkeit zu gewährleisten.
Zu jedem Beispiel wurde als Referenz ein konventionell über thermisch initiierte radikalische Polymerisation hergestelltes Polymer aufgeführt. Zunächst wurden alle Beispiele einer thermischen Lagerung unterzogen, anschließend wurde der Gelwert bestimmt. Die Ergebnisse sind in Tabelle 2 aufgelistet.

**Tabelle 2**

| Beispiel | Gelwert [%] |
|---|---|
| 3 | 0 |
| 4 | 5 |
| 5 | 0 |
| 6 | 8 |
| 7 | 0 |
| 8 | 14 |

Tabelle 2 zeigt, daß bei allen UV-initiierten Polymerisationen, unabhängig vom eingesetzten Harz oder vom Vernetzer, kein Gelanteil detektiert werden konnte. Die im Vergleich hierzu hergestellten Referenzmuster weisen dagegen einen Gelanteil von 5 bis 14 % auf - ein Anteil, der im Hotmelt-Prozess eine saubere Beschichtung aus der Schmelze nicht zuläßt.

Des weiteren wurden die klebtechnischen Eigenschaften der hergestellten Muster nach der Beschichtung miteinander in Tabelle 3 verglichen.

**Tabelle 3**

| Beispiel | KK-Stahl [N/cm] | SSZ, 10 N [min] | ES-Dosis [kGy] |
|---|---|---|---|
| 3 | 11,4 | 5145 | 50 |
| 4 | 12,1 | 3320 | 50 |
| 5 | 9,4 | 4765 | 50 |
| 6 | 10,1 | 2920 | 50 |
| 7 | 10,2 | 3005 | 40 |
| 8 | 10,6 | 1855 | 40 |
| 100 g/m² Masseauftrag | | | |
| SSZ : Scherstandzeit bei RT | | | |
| KK: Klebkraft | | | |

Die klebtechnischen Eigenschaften der dargelegten Beispiele variieren kaum. Die durch die UV-initiierte Polymerisation hergestellten Muster besitzen eine etwas höhere Scherfestigkeit. Dagegen liegt die Klebkraft im Durchschnitt auf einem nur geringfügig niedrigeren Niveau.

## Patentansprüche

1. Verfahren zur Herstellung von Haftklebemassen auf Acrylathotmeltbasis, bei welchem eine Monomermischung enthaltend zumindest die folgenden Monomere
(a) 70 bis 100 Gew.-% Verbindungen aus der Gruppe der (Meth-)Acrylsäure sowie deren Derivate entsprechend der folgenden allgemeinen Formel 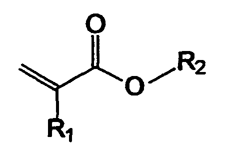 mit R₁ = H oder CH₃ und R₂ = eine Alkylkette mit 2 bis 20 Kohlenstoffatomen
sowie enthaltend
(b) 0 bis 30 Gew.-% olefinisch ungesättigte Monomere mit funktionellen Gruppen
sowie enthaltend
(c) gegebenenfalls weitere Komponenten,
in Lösung radikalisch polymerisiert wird, so daß ein Polyacrylat entsteht, **dadurch gekennzeichnet, daß**
I. die Polymerisation durch Verwendung zumindest eines spaltenden Photoinitiators und durch Bestrahlung mit ultraviolettem Licht initiiert wird, wobei der Photoinitiator vor Beginn der Polymerisation zu der Monomerenmischung und/oder im Verlauf der Polymerisation zu dem Reaktionsgemisch gegeben wird,
II. das Polyacrylat vom Lösungsmittel befreit wird,
III. das Polyacrylat in der Schmelze weiterverarbeitet wird.

2. Verfahren nach Anspruch 1, **dadurch gekennzeichnet, daß**
der oder die Photoinitiatoren zu einem Anteil von 0,1 bis 2 Gew.-%, bevorzugt zwischen 0,25 und 1 Gew.-%, bezogen auf die Monomermischung, eingesetzt wird.

3. Verfahren nach zumindest einem der vorangehenden Ansprüche, **dadurch gekennzeichnet, daß**
die Bestrahlung mit ultraviolettem Licht in Form mehrerer Bestrahlungszyklen durchgeführt wird und/oder daß gepulst eingestrahlt wird.

4. Verfahren nach zumindest einem der vorangehenden Ansprüche, **dadurch gekennzeichnet, daß**
die radikalische Polymerisation zumindest bis zu einem Umsatz von 98 % der Monomere durchgeführt wird.

5. Verfahren nach zumindest einem der vorangehenden Ansprüche, **dadurch gekennzeichnet, daß**
die Entfernung des Lösungsmittels nach der Polarisation in einem Doppelschneckenextruder durchgeführt wird.

6. Verfahren nach zumindest einem der vorangehenden Ansprüche, **dadurch gekennzeichnet, daß**
der Monomermischung, dem Reaktionsgemisch oder dem Polyacrylat Vernetzer zugesetzt werden, insbesondere bi- oder multifunktionelle Acrylate und/oder Methacrylate, bi- oder multifunktionelle Isocyanate oder bi- oder multifunktionelle Epoxide.

7. Verfahren nach zumindest einem der vorangehenden Ansprüche, **dadurch gekennzeichnet, daß**
der Monomermischung, dem Reaktionsgemisch oder dem Polyacrylat Harze und/oder Additive wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

8. Verfahren nach zumindest einem der vorangehenden Ansprüche, **dadurch gekennzeichnet, daß**
die Haftklebemasse aus der Schmelze heraus auf ein Trägermaterial aufgetragen wird.

9. Verwendung der nach zumindest einem der vorangehenden Ansprüche hergestellten Haftklebemasse für ein Klebeband, wobei das Klebeband ein- oder beidseitig mit einer selbstklebenden Schicht ausgerüstet sein kann.

## Claims

1. Process for preparing pressure-sensitive adhesives based on acrylate hotmelt, in which a monomer mixture including at least the following monomers
(a) 70 to 100% by weight of compounds from the group of (meth)acrylic acid and the derivatives thereof corresponding to the following general formula 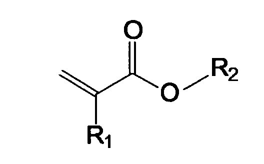 with R₁ = H or CH₃ and R₂ = an alkyl chain having 2 to 20 carbon atoms
and also including
(b) 0 to 30% by weight of olefinically unsaturated monomers containing functional groups
and also including
(c) if desired, further components
is free-radically polymerized in solution to give a polyacrylate, **characterized in that**
I. the polymerization is initiated using at least one dissociating photoinitiator and by irradiation with ultraviolet light, the photoinitiator being added to the monomer mixture before the beginning of the polymerization and/or to the reaction mixture in the course of the polymerization,
II. the polyacrylate is freed from the solvent,
III. the polyacrylate is processed further in the melt.

2. Process according to Claim 1, **characterized in that** the photoinitiator or photoinitiators is or are used in a fraction of from 0.1 to 2% by weight, preferably between 0.25 and 1% by weight, based on the monomer mixture.

3. Process according to at least one of the preceding claims, **characterized in that** the irradiation with ultraviolet light is carried out in the form of two or more irradiation cycles and/or **in that** pulsed irradiation is carried out.

4. Process according to at least one of the preceding claims, **characterized in that** the free-radical polymerization is conducted at least up to a conversion of 98% of the monomers.

5. Process according to at least one of the preceding claims, **characterized in that** the removal of the solvent is carried out after the polarization in a twin-screw extruder.

6. Process according to at least one of the preceding claims, **characterized in that** crosslinkers are added to the monomer mixture, to the reaction mixture or to the polyacrylate, especially difunctional or polyfunctional acrylates and/or methacrylates, difunctional or polyfunctional isocyanates or difunctional or polyfunctional epoxides.

7. Process according to at least one of the preceding claims, **characterized in that** resins and/or additives such as ageing inhibitors, light stabilizers, ozone protectants, fatty acids, plasticizers, nucleating agents, blowing agents, accelerators and/or fillers are added to the monomer mixture, to the reaction mixture or to the polyacrylate.

8. Process according to at least one of the preceding claims, **characterized in that** the pressure-sensitive adhesive is applied from the melt to a backing material.

9. Use of the pressure-sensitive adhesive prepared according to at least one of the preceding claims for an adhesive tape, it being possible for the adhesive tape to be provided with a self-adhesive layer on one or both sides.

## Revendications

1. Procédé de préparation de matières auto-adhésives à base d'acrylate thermofusible, dans lequel on polymérise par voie radicalaire en solution un mélange de monomères contenant au moins les monomères suivants :
(a) 70 à 100% en poids de composés du groupe de l'acide (méth)acrylique ainsi que ses dérivés correspondant à la formule générale suivante 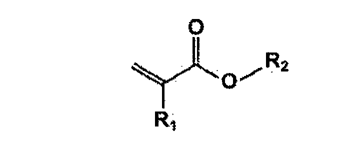 avec R₁ = H ou CH₃ et R₂ = une chaîne alkyle avec de 2 à 20 atomes de carbone
contenant également
(b) 0 à 30% en poids de monomères oléfiniquement insaturés avec des groupes fonctionnels
contenant également
(c) éventuellement d'autres composants,
de manière à produire un polyacrylate, **caractérisé en ce que**
I. la polymérisation est amorcée par l'utilisation d'au moins un photo-initiateur de clivage et par irradiation avec de la lumière ultraviolette, le photo-initiateur étant ajouté au mélange de monomères avant le début de la polymérisation et/ou au mélange réactionnel au cours de la polymérisation,
II. on élimine le solvant du polyacrylate,
III. on transforme le polyacrylate par fusion.

2. Procédé selon la revendication 1, **caractérisé en ce que** l'on utilise le ou les photo-initiateurs en une proportion de 0,1 à 2% en poids, de préférence entre 0,25 et 1% en poids, par rapport au mélange des monomères.

3. Procédé selon au moins l'une quelconque des revendications précédentes, **caractérisé en ce que** l'on effectue l'irradiation avec de la lumière ultraviolette sous la forme de plusieurs cycles d'irradiation et/ou **en ce qu'**on irradie de manière pulsée.

4. Procédé selon au moins l'une quelconque des revendications précédentes, **caractérisé en ce que** l'on effectue la polymérisation radicalaire au moins jusqu'à une conversion de 98% des monomères.

5. Procédé selon au moins l'une quelconque des revendications précédentes, **caractérisé en ce que** l'on effectue l'élimination du solvant après la polymérisation dans une extrudeuse à vis double.

6. Procédé selon au moins l'une quelconque des revendications précédentes, **caractérisé en ce que** l'on ajoute au mélange des monomères, au mélange réactionnel ou au polyacrylate un agent de réticulation, en particulier des acrylates et/ou des méthacrylates bi- ou multifonctionnels, des isocyanates bi- ou multifonctionnels ou des époxydes bi- ou multifonctionnels.

7. Procédé selon au moins l'une quelconque des revendications précédentes, **caractérisé en ce que** l'on ajoute au mélange des monomères, au mélange réactionnel ou au polyacrylate des résines et/ou des additifs comme des agents de protection contre le vieillissement, des agents de protection contre la lumière, des agents de protection contre l'ozone, des acides gras, des plastifiants, des agents de germination, des agents gonflants, des accélérateurs et/ou des agents de remplissage.

8. Procédé selon au moins l'une quelconque des revendications précédentes, **caractérisé en ce que** l'on dépose la matière auto-adhésive à l'état fondu sur un matériau support.

9. Utilisation de la matière auto-adhésive préparée selon au moins l'une quelconque des revendications précédentes pour un ruban adhésif, le ruban adhésif pouvant être muni d'une couche autocollante sur une ou les deux faces.
